(19)

Europäisches
Patentamt
European
Patent Office
Office européen
des brevets

(11) **EP 1 847 700 A2**

(12) **EUROPEAN PATENT APPLICATION**

(43) Date of publication:
**24.10.2007 Bulletin 2007/43**

(51) Int Cl.:
*F02C 9/28* (2006.01)

(21) Application number: **07251533.1**

(22) Date of filing: **07.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **22.04.2006 GB 0607989**

(71) Applicant: **Rolls-Royce plc
London
SW1E 6AT (GB)**

(72) Inventor: **Pashley, Nicholas Charles
Henleaze
Bristol BS9 4HS (GB)**

(74) Representative: **Bird, Vivian John et al
Rolls-Royce plc,
Intellectual Property Dept WH 58,
P.O. Box 3,
Filton
Bristol BS34 7QE (GB)**

(54) **Fuel control system**

(57)     The present application relates to fuel flow limit calculator (12) for use with a fuel control system (30) of an engine (10) comprising a fuel delivery means (28) and a compressor (16). The fuel control system (12) seeks to control the fuel/air ratio (FAR) near the weak extinction limit of the engine (10) as calculated by the fuel flow limit calculator (12). Both the static (PS3) and total (P3) pressure are measured at the exit of compressor (16). This enables a flow reference value (Q3) to be determined so that the air mass flow (W3) can be calculated and the limiting fuel/air ratio calculated. An advantage of the present invention is that it does not require stable combustion for satisfactory operation and allows the occurrence of preferential extinction within an annular combustor (22) to be beneficially utilised. The present application also relates to a method of controlling the fuel flow (WFE) to an engine (10).

Fig. 3

EP 1 847 700 A2

**Description**

The present invention relates to a fuel control system.

In particular it relates to a fuel flow limit calculator for use with a fuel control system of a gas turbine engine and a method of determining minimum fuel flow to maintain engine operation.

In a gas turbine engine operation the ratio of air to fuel in the combustion process is controlled in accordance with varying conditions in order to stabilise the combustion process. For any set of operating conditions a combustion chamber has rich and weak fuel/air ratio limits beyond which a flame is not sustained. Extinction of a flame is most likely to occur during an engine deceleration when fuel flow is reduced, and at high forward aircraft speed, because at these conditions the airflow is high and fuel flow is low, hence the air/fuel mixture strength is weak.

Emissions regulations imposing lean fuel/air ratios have been introduced to reduce unwanted pollutants that are abundant in fuel rich combustion conditions. In addition, operators often demand engine deceleration rates as good as or better than those previously achieved by richer burning engines. To satisfy both of these considerations it is often necessary to operate an engine near its weak extinction limit.

Modern digital engine control systems, for example FADEC (Full Authority Digital Engine Control), limit the supply of fuel in accordance with a scheduled fuel/air ratio (FAR) limit in order to prevent weak extinction. Compressor exit pressure (P3) is assumed to be a good flow descriptor and such control systems rely upon pre-defined relationships between compressor exit pressure (P3) and combustor entry air flow.

Thus:

$$FAR_{min} \propto \frac{WFE}{P3} \qquad (I)$$

where

FAR$_{min}$     is the minimum Fuel/Air Ratio
WFE       is the main engine fuel flow
P3         is the compressor exit pressure.

This relationship assumes a stable combustion process in which all burners in the combustor are alight. The value of FAR$_{min}$ is determined empirically by engine test.

Despite the provision of a fuel/air ratio (FAR) limiter, some engines, in particular those for which the weak extinction boundary has been compromised in a bid to satisfy both emission and engine performance requirements, have encountered problems with combustor stability when the fuel/air ratio is low, for instance during engine deceleration. This can be explained by the interaction of the parameter used to determine air flow and a pressure head effect introduced by use of a fuel supply manifold to supply fuel to the burners. The pressure head effects arise due to a small difference in fuel supply between, for example, burners at the top and bottom of an annular combustor. Although normally insignificant at marginal combustion conditions, when the fuel/air ratio is low, these pressure head effects can cause individual burners to extinguish. For example, the top burner may extinguish while the bottom burner continues to support combustion.

However, once a burner has extinguished, a drop in pressure is experienced at the exit of the compressor. Known fuel control systems that rely on an assumption of stable combustion incorrectly identify this pressure drop as due to a reduction in the airflow through the combustor. The system then compounds the problem by maintaining the scheduled fuel/air ratio limit by reducing fuel flow. This decrease in fuel/air ratio (FAR) results in the extinction of more burners as they reach their individual weak extinction limits. The resultant divergence, whereby more burners flame out and fuel supply is further reduced, continues until the combustor is fully extinguished. Known fuel control systems have attempted to avoid this problem by employing means to limit the fuel/air - ratio (FAR) so that preferential extinction does not occur. Methods of accommodating preferential extinction have been developed which acknowledge the unsatisfactory combustor extinction margins and strive to ensure that total extinction does not occur. This is achieved by means of staged combustion which involves causing the majority of burners to deliberately extinguish leaving only, for example, two burners operating at a stable "fuel rich" condition close to idle.

Current fuelling schedules employed by known fuel control systems prefer a stable signal for compressor exit pressure, and hence there is a risk that upon switching on the preferential burners, the control system may be perturbed and become unstable resulting in a combustor flameout. It is therefore desirable to provide a more robust method of controlling the fuel/air ratio which provides improved combustor stability when operating near the weak-extinction limit. The present invention seeks to overcome these drawbacks by providing fuel control means which limits the minimum fuel/air ratio achievable by the engine, thereby reducing the possibility of combustor extinction near the weak extinction limit.

According to one aspect of a preferred embodiment of the present invention there is , provided a gas turbine engine fuel flow control system in which fuel is supplied to the engine combustor by a fuel delivery means, and the fuel flow to the combustor is controlled by a fuel delivery control means, wherein a minimum fuel supply value is set by a fuel flow limit calculator in response to: a total pressure signal representing measured total pressure of the combustor air supply at an air supply outlet, a temperature signal representing the temperature of the combustor air supply at the air supply outlet, and a corrected engine speed signal, characterised in that the flow limit calculator is further provided with a total pressure signal representing measured static pressure of the combustor air supply at the air supply outlet, and includes calculator means operable to calculate a fuel supply value as a function of total pressure divided by static pressure.

According to a second aspect of a preferred embodiment of the present invention, there is provided a method of controlling the fuel flow to an engine comprising a fuel delivery means and an air supply means, comprising the step of measuring the total pressure at the exit of the air supply means; characterised in that the method further comprises the steps of measuring the static pressure at the exit of the air supply means; calculating a fuel supply value as a function of total pressure divided by static pressure, and limiting fuel flow delivered by the fuel delivery means to a lower limit no less than the fuel supply value.

Preferably the fuel flow limit calculator operable to calculate a fuel supply value includes a first means operable to calculate a flow reference value as a function of total pressure divided by static pressure, a second means operable to calculate an air mass flow as a function of the flow reference value a fuel-air ratio calculation means operable to calculate a limiting fuel/air ratio as a function of the flow reference value and a third means operable to multiply fuel/air ratio by air mass flow to calculate the fuel supply value.

The present invention allows the airflow to be calculated directly, rather than using a theoretical relationship which is only valid when all burners are lit, and hence a more accurate weak extinction limit can be identified by the fuel flow limit calculator. An important advantage of preferred embodiments of the present invention is that the fuel flow limit calculator does not require stable combustion for satisfactory operation. The present invention advantageously provides the ability for a FADEC controlled engine to distinguish between a reduction in airflow (which allows a corresponding reduction in fuel) and burner extinction. Thus, the present invention advantageously ensures that a partial extinction, that is to say an extinction of one or more burners, does not necessarily lead to combustor extinction. Indeed, it is envisaged that preferred embodiments of the present invention allow the occurrence of preferential extinction to be utilised when operating turbine engines near the weak extinction limit, since individual burner extinction may be accommodated. Additionally improved deceleration times may be advantageously achieved with the resultant lean fuel/air ratio.

Preferably the air supply means is a compressor and the total pressure measuring means static pressure measuring means are provided at a measuring section substantially at the exit of the compressor.

Preferably, the measurement of compressor exit total and static pressures are made in the same plane. In order to tolerate variations in flow profile during individual burner extinction, it is recommended that measurements are made at 90 degree intervals and are ganged together to measure an average pressure, however this invention shall encompass any number of such measurements in this plane.

The non-dimensional mass flow $\dfrac{W3\sqrt{T3}}{P3}$ may be calculated from the flow reference value using the effective area of the measuring section, which is assumed to be a function of the total pressure ($P_3$) measured at the exit of the compressor and the corrected spool speed for the compressor.

Preferably, the fuel flow calculator also comprises a means for determining the effective area (Ae3) of the measuring section which is operable to receive an input signal representative of the total pressure (P3) and an input signal representative of corrected rotational speed (NHC) of the compressor.

In accordance with a preferred embodiment, means are provided for determining the non-dimensional mass flow which is operable to receive an input signal from the means to determine the flow reference value and an input signal representative of the measuring section effective area.

The air mass flow for the engine may then be calculated from the non-dimensional mass flow, the measured compressor exit total pressure and the measured temperature. The fuel flow calculator embodying the present invention may further comprise a first multiplying means which is operable to receive an input signal from the means for determining the non-dimensional mass flow and an input signal representative of the total pressure at the exit of the high pressure compressor.

A second multiplying means may also be provided which is operable to receive an input signal from the first multiplying means and an input signal representative of the temperature from a temperature measurement means provided at the measuring section substantially at the exit of the compressor.

The required fuel/air ratio is preferably made a function of a predetermined parameter, for example the compressor exit non-dimensional mass flow.

For a better understanding of the present invention, and to show how the same may be carried into effect, reference will now be made, by way of example, to the accompanying drawings in which:

Figure 1 (PRIOR ART) illustrates a fuel control method according to the prior art;

Figure 2 (PRIOR ART) shows the effect of preferential extinction when employing a fuel control method as shown in Figure 1; and

Figure 3 illustrates a fuel flow calculator for use with a fuel control system and fuel flow control method according to the present invention.

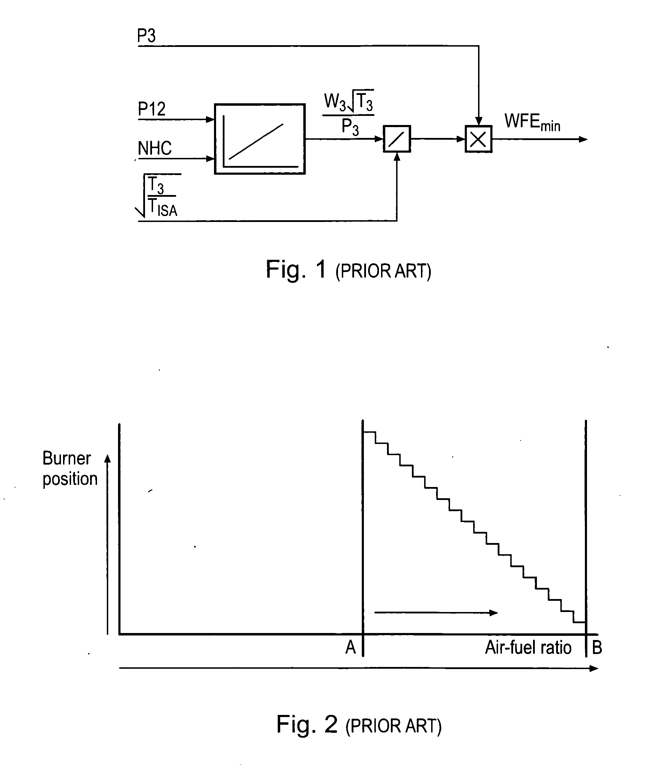

Figure 1 illustrates a means for controlling fuel flow according to the prior art which includes measuring the static pressure measured at the exit of the compressor, and controlling fuel flow in accordance with a predetermined relationship between the static pressure and the combustor entry airflow. This relationship assumes stable combustion in which all airsprays of the burner are burning and that airflow is a function of the measured total pressure at compressor exit and engine entry temperature. A look up table; or graph, represents the Fuel/Air Ratio limit ($FAR_{limit}$) as a function of corrected compressor spool speed (NHC) and engine entry total pressure (P12). It should be noted that experience has shown that FAR is largely insensitive to engine entry total pressure (P12) and so it is not a good indicator of the fuel/air ratio limit. The required fuel flow at the engine speed is calculated from the $FAR_{limit}$, the engine entry temperature (T3) and compressor exit total pressure (P3).

$$FAR = \frac{WFE \times \sqrt{\theta}}{P3} = f(NHC, P12)$$

Thus, since

$$FAR_{min} = \frac{WFE}{P3} \quad (II)$$

where:

FAR     is Fuel-Air Ratio;
WFE     is fuel flow;
P3       is compressor exit total pressure;
P12      is engine entry total pressure
NHC     is corrected compressor spool speed, and
θ        is corrected engine entry temperature, where

$$\sqrt{\theta} = \frac{T_{measured}}{T_{isa}} = \frac{T_{measured}}{288.15}$$

$$(III)$$

and $T_{isa}$ is International Standard Atmospheric condition, 288.15K the $FAR_{limit}$ can multiplied by the compressor exit total pressure P3 and divided by the corrected engine entry temperature, θ, to obtain the minimum allowable fuel flow for stable operation:

$$WFE_{min(IV)} = \frac{WFE_{min} \times \sqrt{\theta}}{P3} \times {P3}/{\sqrt{\theta}} = FAR_{limit} \times {P3}/{\sqrt{\theta}}$$

$$(IV)$$

Figure 2 (PRIOR ART) illustrates the effect of individual burner extinction within the present fuel control means and plots burner position (y-axis) against fuel/air ratio (x-axis) to show the individual weak-extinction limits of the burners. Once a single burner is extinguished at a given fuel/air ratio A, a drop in pressure is experienced at the compressor exit. The prior art fuel control system, which relies on an assumption of stable combustion, incorrectly identifies this pressure drop as being due to a reduction in the airflow through the combustor. It then attempts to maintain the scheduled fuel/air ratio by reducing the fuel flow. Unfortunately, an increase in air/flow ratio results in the extinction of more burners as they reach their individual weak extinction limits. The graph illustrates the resultant divergence, whereby more burners flame out and fuel supply is further reduced, which continues until the combustor extinguishes completely at a fuel/air ratio B.

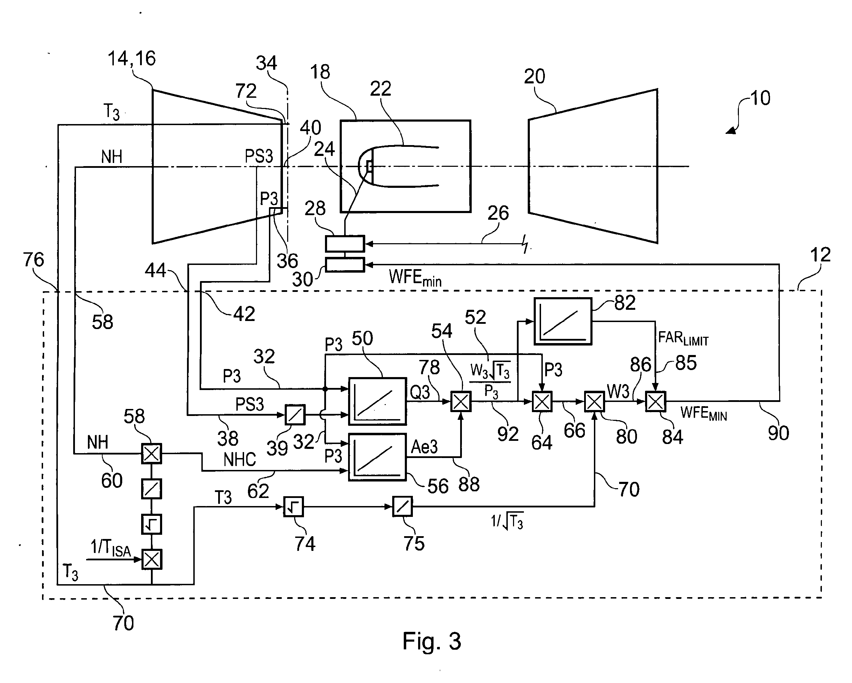

Referring now to Figure 3 there is shown in detail a functional block diagram of a fuel flow limit calculator 12 of a gas turbine engine fuel flow control system. The engine is generally indicated diagrammatically at 10, and comprises air supply means 14, otherwise, in this illustration compressor 16, a combustion section 18 and a turbine section 20. Combustion section 18 comprises an annular combustor 22 provided with a plurality and fuel injectors 24 spaced apart around the combustor 22. Air is delivered to the combustor 22 from compressor 16 and hot combustion gas exhausts into the turbine 20. Fuel is delivered to the fuel injectors 24 from a fuel supply 26 via a fuel delivery means 28, in the form of a high-pressure pump. Fuel flow from the delivery means 28 is governed by a fuel flow control system generated by the FADEC system (not shown).

In accordance with the present invention the fuel flow control system 30 also receives on line 90 a minimum fuel flow signal $WFE_{min}$ generated by fuel flow limit calculator 12. This signal $WFE_{min}$ is produced by calculator 12 using signals representing dynamic measurements from sensors in the engine at the exit plane 34 of the air supply or compressor 14/16; that is at the entrance of the combustion section 18. Thus, line 42 carries a signal from a first pressure sensing means 36 representing total pressure P3 at the exit measuring plane 34, line 44 carries a signal from a second pressure sensing means 40 representing static pressure PS3 at the exit plane 34, line 76 carries a signal from temperature probe 72 representing the measured temperature T3 of compressor delivery air, and line 58 carries a signal representing (high-pressure) compressor spool speed NH. The signal lines 42, 44, 58, 76 are respectively connected to inputs 32, 38, 60 and 70 of calculator 12.

Figure 3 illustrates calculator 12 in terms of the various functions evaluated to derive the signal representing $WFE_{min}$ in accordance with the mathematical equations contained herein. It will be understood that these functions are shown in logic or mathematical operator block diagram form for the purposes of illustration only. They are not intended as necessarily representative of a physical construction of electronic circuits designed to perform the indicated functions. In reality the calculator 12 may comprise a suitable programmed microprocessor.

$WFE_{min}$ cannot be calculated directly from measurements of engine parameters, a certain amount of intermediate calculation is required. This is illustrated in Figure 3 by the several parallel flow paths and by the plurality of interconnected function blocks. Four dynamic engine parameters are measured at the output measuring plane 34 of compressor 16 and provide the basic dynamic inputs to calculator 12. In addition fixed engine characteristic measurements are stored in data or look-up tables embedded within calculator 12 for instant access.

The calculation function steps within calculator 12 may be understood reasonably easily by working back from the final calculation through intermediate calculations to the available inputs. In the final calculation is

$$WFE_{min} = FAR_{limit} \times W3 \qquad (V)$$

the value of $FAR_{limit}$ is obtained from a look-up table according to the current non-dimensional mass flow value, and $W3$ is calculated using the formula:

$$W3 = \frac{W3 \times \sqrt{T3}}{P3} \times \frac{P3}{\sqrt{T3}} \qquad (VI)$$

where $P3$ and $T3$ are the total pressure and temperature inputs.

The expression $\dfrac{W3 \times \sqrt{T3}}{P3}$ is obtained by multiplying together the non-dimensional mass flow at the compressor output using the expression :

$$Q3 = \frac{W3 \times \sqrt{T3}}{A_e 3 \times P3} \qquad (VII)$$

with

$$A_e = A_{geo} \times C_d \qquad (VIII)$$

both for the measuring plane 34.
In general terms,

$$Q = M \times \sqrt{\frac{\alpha}{R}} \times \left\{ 1 + \frac{\alpha - 1}{2} M^2 \right\}^{\frac{1}{2} - \left( \frac{\alpha}{\alpha - 1} \right)} \qquad (IX)$$

where :

$\alpha$     is the ratio of specific heats
R     is the specific gas constant, and
M     mach number, which is calculated using:-

$$M = \sqrt{ \left( \left( \frac{P_{total}}{P_{static}} \right)^{\alpha - \frac{1}{\alpha}} - 1 \right) \frac{2}{\alpha - 1} } \qquad (X)$$

where

$$C_d = f\left( P3, NHC \right) \qquad (XI)$$

and

$$NHC = \frac{NH}{\sqrt{\theta}} \qquad (XII).$$

Thus all factors required to evaluate the final output are derived from the quantities measured at the compressor output measuring plane or are measured characteristics of the engine.
Returning now to the functional description of calculator, 12 the input lines 32 and 38 carrying instantaneous signals for total pressure P3 and static pressure *PS3* are connected to the inputs of a first data or look-up table 50, the *PS3* signal through an inverter 39. Look-up table 50 is pre-loaded with values of Q over the operational Mach number range of the engine and produces an intermediate output on line 78 representing an instantaneous value of *Q3.*

In parallel a second data or look-up table 56 is connected to receive the total pressure *P3* and, through a multiplier 58 the corrected spool speed signal *NHC* based on the measured spool speed signal *NH* on input line 60. Look-up table 56 is pre-loaded to produce an output on line 88 representing the effective area of the compressor output *Ae3*.

The signals on lines 78, 88 representing *Q* and *Ae3* are connected to the inputs of a multiplier 54 which produces on its output line 92 a signal representing non-dimensional mass flow. The signal on line 92 is connected to one input of a multiplier 64 and the other input is connected to line 32 to receive the signal representing *P3*. The output on line 66 is connected to one input of a further multiplier 80. The *T3* signal on line 70 passes through a circuit 74 which produces a signal representing the square root which is inverted by an inverter 75 the output of which is connected to a second input of multiplier 80. The result of the operation of multiplier 80 is a signal on line 86 representing the quantity *W3*.

The final mathematical operation to produce *WFE$_{min}$* is carried out by a fourth multiplier 84. This operator receives its first input *W3* from line 86 and its second input *FAR$_{limit}$* from a signal loop 85 from line 92 including a third data or look-up table 82 preprogrammed to output a *FAR$_{limit}$* according to the signal on line 92 representing non-dimensional mass flow. This final output signal comprises the required *WFE$_{min}$* signal and is supplied via line 90 to the fuel supply control system 30. As previously described the fuel flow control system 30 regulates the fuel supply 26 delivered by the fuel delivery means 28 such that the lowest fuel flow which may be delivered to the combustor 22 via the fuel injectors 24 is the minimum fuel flow *WFE$_{min}$*.

Thus the minimum fuel flow *WFE$_{min}$* which will be achieved by the engine 10 is based upon a value for the total amount of air *W3* entering the combustor 22 and a *FAR$_{limit}$* which are both calculated using a ratio of total pressure P3 to static pressure *PS3*. Extinction of a fuel injector 24 will result in a drop in total pressure P3 and a corresponding drop in static pressure *PS3*. Since *W3* and *FAR$_{limit}$* are based on the ratio of total pressure *P3* to static pressure *PS3* and not an absolute value of *P3,* a pressure drop will have little effect on their calculation. Hence the fuel flow limit calculator 12 of the present invention is insensitive to fuel injector 24 extinction, and thus provides for a more reliable combustion system when operating the engine near the weak extinction limit. Since the present invention also enables the engine 10 to be run closer to the weak extinction limit without risk of flameout, the engine 10 can run generally leaner, and hence produce fewer emissions, as well as enabling increased deceleration rates.

List of References

|    |    |
|----|----|
| 10 | Gas turbine engine |
| 12 | Fuel flow limit calculator |
| 14 | Air supply means |
| 16 | Compressor |
| 18 | Combustion section |
| 20 | Turbine section |
| 22 | Combustor |
| 24 | Fuel injectors |
| 26 | Fuel supply |
| 28 | Fuel delivery means |
| 30 | Fuel flow control system |
| 32 | Input signal representing total pressure P3 |
| 34 | Measuring plane compressor outlet |
| 36 | Total pressure P3 measurement means |
| 38 | Static pressure *PS3* signal |
| 39 | Inverter |
| 40 | Static pressure *PS3* measurement means |
| 42 | Signal line for total pressure P3 signal 32 |
| 44 | Signal line for Static pressure *PS3* signal 38 |
| 46/48 | Not used48 |
| 50 | Data table (look-up table) for *Q3* . |
| 52 | Mass flow (non-dimensional) at compressor outlet plane 34 |
| 54 | Multiplier means |
| 56 | Data table (look-up table) for Effective area *Ae3* |
| 58 | Means for generating corrected speed signal *NHC* |
| 60 | Input signal representing speed *NH* of compressor 16 |
| 62 | Input signal representing corrected speed *NHC* of compressor 16 |

| 64 | First multiplying means |
|---|---|
| 66 | Input signal/output signal from 64 |
| 70 | Measured temperature signal T3 |
| 72 | *T3* temperature measurement means |
| 74 | Means for producing √*T3* |
| 75 | Inverter for producing 1/√*T3* |
| 76 | Input for receiving measured temperature T3 |
| 78 | *Q3* output signal from look-up table 50 |
| 80 | Second multiplying means |
| 82 | Data table (look-up table) for Fuel-air calculation |
| 84 | Third multiplying means |
| 86 | Input signal representing air mass flow/output *W3* from 80 |
| 88 | Input signal representing effective area *Ae3* of measuring plane 34 |
| 90 | Output signal line from calculator 12 |
| 92 | Input signal carrying signal 52 for non-dimensional mass flow |

| $A_{geo}$ | Geometric area of measuring plane 34 |
|---|---|
| *Ae3* | Effective geometric area of output plane 34 of compressor 16 |
| *Cd* | Coefficient of discharge at measuring plane 34 |
| $FAR_{limit}$ | Fuel/Air ratio limit |
| *NH* | Compressor spool speed |
| *NHC* | Corrected compressor spool speed |
| *P3* | Compressor exit total pressure |
| *PS3* | Static pressure at compressor output measuring plane 34 |
| *P12* | Engine entry total pressure |
| *T3* | Engine entry temperature |
| $T_{ISA}$ | International Standard Atmosphere temperature, 288.15°K |
| *WFE* | Fuel flow |
| $WFE_{limit}$ | Weak extinction fuel flow level |
| *WFEmin* | Minimum fuel flow |
| θ | Corrected engine entry temperature |
| α | Ratio of specific heats |
| R | Specific gas constant |
| *M* | Mach number of gas flow |

**Claims**

1.  A gas turbine engine (10) fuel flow control system in which fuel is supplied to the engine combustor (22) by a fuel delivery means (28), and the fuel flow (WFE) to the combustor (22) is controlled by a fuel delivery control means (30), wherein a minimum fuel supply value ($WFE_{min}$) is set by a fuel flow limit calculator (12) in response to: a total pressure signal (32) representing measured total pressure ($P_3$) of the combustor air supply at an air supply outlet (34), a temperature signal (T3) representing the temperature of the combustor air supply at the air supply outlet (34), and a corrected engine speed signal (NHC) (62),
    **characterised in that** the flow limit calculator (12) is further provided with a total pressure signal (PS3) representing measured static pressure (PS3) of the combustor air supply at the air supply outlet (34), and includes calculator means (50, 54, 56, 64, 80, 82, 84) operable to calculate a fuel supply value ($WFE_{min}$) as a function of total pressure (P3) divided by static pressure (PS3).

2.  A fuel flow control system as claimed in claim 1 wherein fuel flow limit calculator (12) operable to calculate a fuel supply value ($WFE_{min}$) includes
    a first means (50) operable to calculate a flow reference value (Q3) as a function of total pressure (P3) divided by static pressure (PS3),
    a second means (80) operable to calculate an air mass flow (W3) as a function of the flow reference value (Q3)
    a fuel-air ratio calculation means (82) operable to calculate a limiting fuel/air ratio ($FAR_{limit}$) as a function of the flow reference value (Q3)
    and a third means (84) operable to multiply fuel/air ratio ($FAR_{limit}$) by air mass flow (W3) to calculate the fuel supply (WFEmin) value.

**3.** A fuel flow control system (12) as claimed in claim 1 or claim 2 wherein the air supply means (14) is a compressor (16), and the total pressure (P3) measuring means (36) and static pressure measuring means (40) are provided at a measuring section (34) substantially at the exit (34) of the compressor (16).

**4.** A fuel flow control system (12) as claimed in claim 3 further comprising a means (56) for determining the effective area (Ae3) of the measuring section (34) which is operable to receive an input signal (32) representative of the total pressure (P3) and an input signal (62) representative of corrected rotational speed (NHC) of the compressor (16).

**5.** A fuel flow control system (12) as claimed in claim 4, further comprising a non-dimensional mass flow (52) determining means (54) for determining the non-dimensional mass flow (52) which is operable to receive an input signal (78) from the means (50) to determine the flow reference value (Q3) and an input signal (88) representative of the measuring section effective area (Ae3).

**6.** A fuel flow control system (12) as claimed in claim 5, further comprising a first multiplying means (64) which is operable to receive an input signal (92) from the means (54) for determining the non-dimensional mass flow (52) and an input signal (32) representative of the total pressure (P3) at the exit of the compressor (34).

**7.** A fuel flow control system (12) as claimed in claim 6, further comprising a second multiplying means (80) which is operable to receive an input signal (66) from the first multiplying means (64) and an input signal (70) representative of temperature (T3) from a temperature measurement means (72) provided at the measuring section (34) substantially at the exit (34) of the compressor (16).

**8.** A method of controlling the fuel flow (WFE) to an engine (10) comprising a fuel delivery means (28) and an air supply means (14); comprising the step of:

measuring the total pressure (P3) at the exit (34) of the air supply means (14);

**characterised in that** the method further comprises the steps of:

measuring the static pressure (PS3) at the exit (34) of the air supply means (14); calculating a fuel supply value (WFEmin) as a function of total pressure (P3) divided by static pressure (PS3), and limiting fuel flow (WFE) delivered by the fuel delivery means (28) to a limit no less than the fuel supply value (WFEmin).

**9.** A method as claimed in claim 8 wherein the fuel supply value (WFEmin) is determined by
calculating a flow reference value (Q3) as a function of total pressure (P3) divided by static pressure (PS3),
calculating an air mass flow (W3) as a function of the flow reference value (Q3)
calculating a limiting fuel/air ratio (FAR) as a function of the flow reference value (Q3)
and multiplying fuel/air ratio (FAR) by air mass flow (W3) to calculate the fuel supply (WFEmin) value.

**10.** A method as claimed in claim 8 or claim 9 wherein the air supply means (14) is a compressor (16), and the total pressure (P3) measuring means (36) and static pressure measuring means (40) are provided at a measuring section (34) substantially at the exit (34) of the compressor (16).

**11.** A method as claimed in claim 9, further comprising determining the effective area (Ae3) of the' measuring section (34) from an input signal (32) representative of the total pressure (P3) at the exit (34) of the air supply means (14) and an input signal (62) representative of corrected rotational speed (NHC) of the compressor (16).

**12.** A method as claimed in claim 9, 10 or 11, further comprising determining a non-dimensional mass flow (52) from the flow reference value (Q3) and an input signal (88) representative of the effective area (Ae3) of the measuring section (34).

**13.** A method as claimed in claim 12, further comprising multiplying an input signal (92) received from the non-dimensional mass flow (52) determining means (54) with an input signal (32) representative of the total pressure (P3) at the exit (34) of the air supply means (14), by means of a first multiplying means (64).

**14.** A method as claimed in claim 13, further comprising multiplying an input signal (66) received from the first multiplying means (64) with an input signal (70) representative of the temperature (T3).

P3

P12 →

NHC →

$\sqrt{\dfrac{T_3}{T_{ISA}}}$

$\dfrac{W_3\sqrt{T_3}}{P_3}$

$WFE_{min}$ →

## Fig. 1 (PRIOR ART)

Burner position ↑

A

Air-fuel ratio

B

## Fig. 2 (PRIOR ART)

Fig. 3